# EUROPEAN PATENT SPECIFICATION

(11) **EP 3 138 796 B1**
(45) Date of publication and mention of the grant of the patent: **19.12.2018**
(21) Application number: 15183622.8
(22) Date of filing: 03.09.2015
(51) Int. Cl.: B65G 53/46, A23N 15/02

(54) **DEVICE FOR THE INTRODUCTION OF SOLID OBJECTS INTO ENVIRONMENTS UNDER CONTROLLED CONDITIONS**
VORRICHTUNG ZUR EINFÜHRUNG VON FESTEN GEGENSTÄNDEN IN UMGEBUNGEN UNTER KONTROLLIERTEN BEDINGUNGEN
DISPOSITIF POUR L'INTRODUCTION D'OBJETS SOLIDES DANS DES ENVIRONNEMENTS DANS DES CONDITIONS CONTRÔLÉES

(43) Date of publication of application: 08.03.2017
(73) Proprietor: Camerani, Stefano, 48018 Raenza, RA (IT)
(72) Inventor: Camerani, Stefano, 48018 Raenza, RA (IT)
(74) Representative: Vatti, Francesco Paolo

(56) References cited:
- EP-A1- 2 431 310
- DE-A1-102008 007 033
- FR-A1- 2 616 630
- GB-A- 803 857
- JP-U- S5 116 376
- US-A1- 2011 048 253

## Description

The present invention refers to a device for the introduction of solid objects into environments which are kept under controlled conditions, such as controlled-atmosphere environments, controlled-temperature environments, pressurised environments, under-vacuum environments and the like.

The controlled-atmosphere processing in getting more and more widespread in the most disparate sectors of the art. Undervacuum processing, pressurised processing, processing in the presence of inert gases, oxidising-atmosphere processing, reducing-atmosphere processing, controlled-humidity processing etcetera are thus provided.

Among the processing which could be better performed in a controlled atmosphere falls the removal of grapes from the stalks. The bunches are introduced into a machine which removes the grapes from the grape stalk for the subsequent transformation thereof into wine and possibly into vinegar. For the transformation into vinegar, since oxidation is almost as extreme as possible (the subsequent step would be that which leads to carbon dioxide and water), the atmosphere conditions within which the processing occurs are relatively little influent. Vice versa, such conditions might have an even significant effect in case of wine production, especially in the case of fine wines. As a matter of fact, oxidation by grape fermentation is strongly inhibited (until being almost absent) when the grape is intact, since the skin acts as protective film, allowing preservation of the grape flesh for an even relatively long time. Perforation, even only a punctiform, of the grape skin, however, may imply fermentation beginning at a non-negligible speed. This premature fermentation may negatively affect the organoleptic properties of the wine produced, thus reducing also the commercial value thereof.

The stalk-removing machine, although it does not have as final object skin tearing (which is performed intentionally and in depth only upon pressing), however, has, to allow the detachment of the grapes from the stalk, cutting bodies which may (and generally do) pierce or tear a percentage of such skins, so that the problem of premature oxidation is, in fact, real and of a certain weight, negatively affecting especially the finest productions.

For the reasons just set forth, it would be desirable to be able to perform the stalk removal in an inert environment. That has been done, trying to work in a nitrogen atmosphere. Machines feeding nitrogen to the stalk-removing machine exist and which subsequently add the grapes. However, precisely grape introduction proves problematic due to the maintenance of the inert atmosphere. As a matter of fact, the introduction of a solid, coming from an air atmosphere without control opportunity, simultaneously implies the entry of the same air and the exit of a remarkable amount of nitrogen, so that grape protection from oxidation is at least incomplete, if not even inexistent. Moreover, a processing of this type requires operating by batches, inputting fresh nitrogen after downloading each batch. Introducing more than one batch of grapes without supplying fresh nitrogen certainly implies that the air levels (and, consequently, oxygen levels) in the stalk-removing machine grow excessively, so much so as to fully impair the measures taken. The drawbacks relating to this kind of process are that there is no effective protection from the air and that there are high nitrogen supply expenses: there are high costs for a certainly not brilliant result, if not a poor or even null one.

What has been just set forth represents a valid example of what the insertion of solids from environment air into a controlled-atmosphere environment implies and has a fully general character. As a matter of fact, as stated in the introduction, the problem, exemplified by the stalk-removing machine, extends also to other fields, such as certain chemical and pharmaceutical processing, electronics, greenhouse agriculture etcetera.

For the dosing of solids so-called rotocells are often used. These are valves having a body and a blade rotor within, actuated by a suitable motor. The solids are supplied to the inside of the rotocell body and the rotor causes the solids to move forward within the conduit, pushing them. The rotocells may operate even under pressure for the pneumatic transport of solids or under vacuum, especially for filter discharge. Said rotocells are used especially for transporting highly slidable materials and may operate in a sealed manner, the sealing being accomplished for the body overall. Generally, they are used for the continuous or semi-continuous supply of solid powders. The atmosphere which these rotocells allow to transmit is that which one has on the suction side thereof and hence they are not per se suitable to insert into a controlled-atmosphere environment solids coming from an environment where such control does not exist.

German patent application no. 10 2008 007033 discloses a device for the introduction of solid objects according to the preamble of claim 1 and among other things, a rotocell for transporting powders, which provides the opportunity of adding a gas supply conduit to increase the pressure of the powder to be transported and a discharge conduit, which allows to remove excess pressure, once the powder has been transported. However, the gas supply conduit has the exclusive function of increasing operating pressure, while the gas discharge conduit serves exclusively as vent. Nothing is stated on the opportunity of working in a controlled environment (for example, an inert one), nor on the opportunity of introducing solids into a plant in a controlled environment, without altering said environment.

British patent no. 803 857 discloses a rotocell the blades of which carry elastic ends; even this patent provides gas supply and discharge conduits, with the same objects and the same limits of German patent no. 10 2008 007033.

The French patent published under no. 2 616 630 discloses a stalk-removing machine with rotating blades, caused to rotate by an external grid. No mention is made of an operation thereof under inert conditions.

Japanese patent document no. S51 - 16 376 discloses a rotocell with supply and discharge conduits.

The problem underlying the present invention is to propose a device which overcomes the mentioned drawbacks and which allows the continuous, semi-continuous or batch supply of solids in environments under controlled conditions. This object is achieved through a device for the introduction of solid objects into environments under controlled conditions, as stated in the appended claim 1.

The present invention also refers to a plant for operations under controlled conditions, as stated in appended claim 4. The sub-claims disclose preferential features of the invention.

Further features and advantages of the invention, however, are more apparent from the following detailed description of a preferred embodiment, given purely as a non-limiting example and illustrated in the attached drawings, wherein:

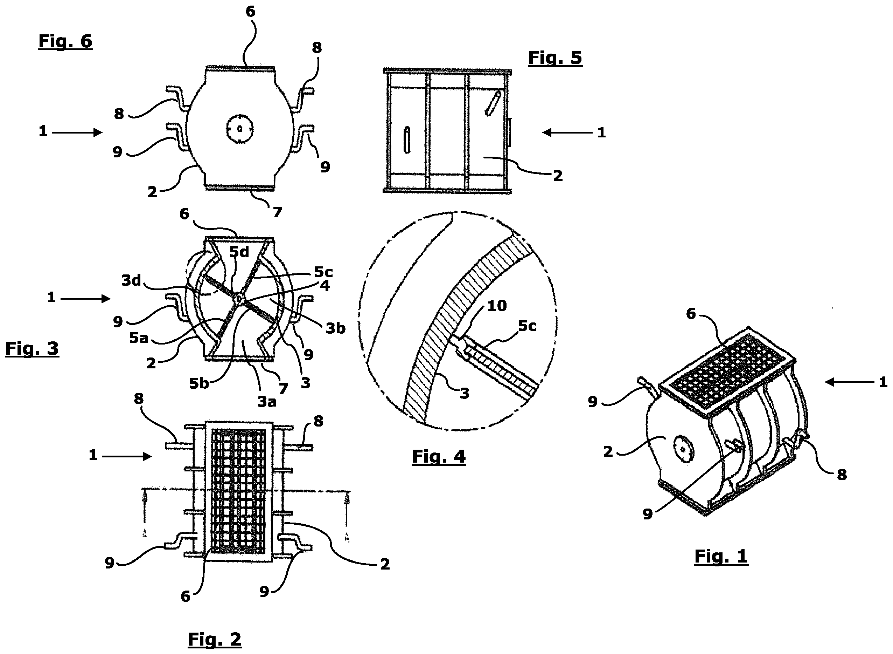

fig. 1 is a perspective view of a device according to the present invention;
fig. 2 is a top plan view of the same embodiment of fig. 1;
fig. 3 is a cross section view, taken along line A-A of fig. 2;
fig. 4 is a detail, reported in the circle C of fig. 3, based on a particularly preferred embodiment;
fig. 5 is a front view of the device according to the present invention;
fig. 6 is a front view of the device according to the present invention; and
fig. 7 is a diagram which illustrates a plant according to another aspect of the present invention.

The device according to the present invention is referred to, overall, by reference number 1. As stated, device 1 is stems from so-called rotocells. Device 1 hence comprises a body 2 which, within the same, contains a cavity 3. Cavity 3 is partitioned in a number of sectors. In the preferred embodiment, cavity 3 is partitioned into four sectors 3A, 3B, 3C and 3D by the blades of a rotor 4. Rotor 4 comprises four blades 5A, 5B, 5C and 5D. Rotocell body 2 also comprises an inlet opening 6 and an outlet opening 7, for loading and unloading the solids to be inserted into the controlled-condition environment.

On the side surface of body 2 at least a gas input conduit 8 and at least a gas output conduit 9 are present.

As regards the blades 5A-5D of rotor 4, they carry, preferably, on the end thereof facing the walls of cavity 3, seals 10, of a suitable material, such as, for example, Teflon, polyethylene, polypropylene, polyvinyl chloride and the like.

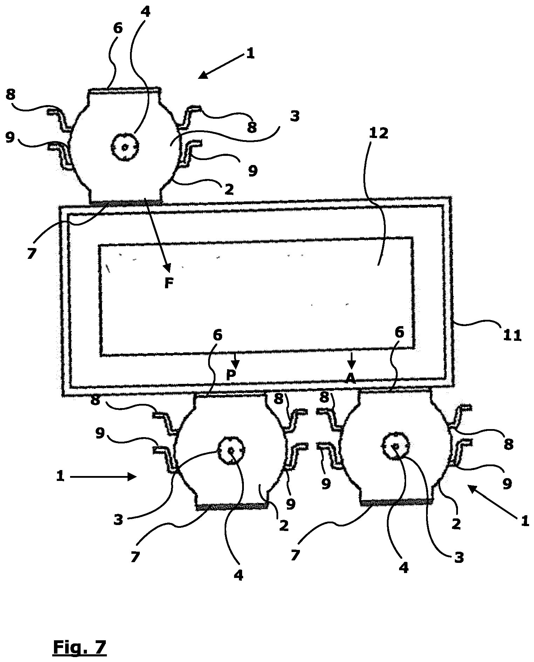

As can be seen in fig. 7, the device 1 according to the invention can be used in a plant 11, maintained under a controlled atmosphere. Said plant 11 contains, within the same, a machine 12, where the processing is performed. Fig. 7 shows three devices 1, one for inputting the solids into plant 11 and two for drawing the products, but it is apparent that the number of devices 1 is not influential for the purposes of the present invention.

In the following, the operation of the device according to the present invention is disclosed, with reference to the drawings.

Seals 10 allow full mutual separation of the sectors 3A, 3B, 3C, 3D each one arranged within a pair of blades 5A-5D of rotor 4. That is, the compartments are comprised one between the blades 5A and 5B, one between blades 5B and 5C, one between the blades 5C and 5D and one between the blades 5D and 5A. In the situation illustrated in the drawings, sector 3C faces inlet opening 6; this of course has purely illustrative meaning and is not substantial for the purposes of the invention. The solid material to be processed is hence introduced in to inlet opening 6 and, from here, into sector 3C. In said sector, of course, the atmosphere is the external one, namely without a special control. Once the filling of sector 3C is completed, a first 90° rotation of rotor 4 is performed. The material is now brought into the position represented in the drawings as sector 3B. Of course, the material has not changed sector and the new indication only shows the new position taken up by the same sector after the first 90° rotation.

When the sector arrives at position 3B, rotor 4 stops and, through conduit 8, a gas of a composition corresponding to that of the atmosphere contained in plant 11 is supplied to the same sector 3B. Such supply preferably occurs as discrete injection. Once the injection has ended, that gas contained in sector 3B is partly caused to vent through conduit 9. The gas going out from conduit 9 contains environment air and a part of the gas just injected. The amount gone out from conduit 9 is equal to the amount put in by injection into conduit 8. Thereby, in sector 3B the gas will be slightly more similar to that of the atmosphere in plant 11. However, the air amount in external conditions will certainly be prevailing. The gas injections from conduit 8 and the gas drawings from conduit 9 will then be repeated several times. Each time, the gas concentration of the environment of plant 11 within sector 3B will increase to the detriment of the external air which decreases, since said external air is never supplied to the sector and, owed to the presence of seals 10, once will come to a situation in which the gas contained in sector 3B will be virtually equal to that contained in plant 11. This situation can be recognised either by preliminary calibrations which allow to find a suitable number of injections, or employing a suitable sensor which measures the concentration of one of the species, so as to check when this concentration within sector 3B is the desired one. If the parameters are different from the concentration (for example, if one has to work in the air, but with a certain humidity rate) the value of such parameters is measured, so as to check in any case when the desired situation has been reached. It is suitable that, during this process, the pressure within the compartment is controlled, for example through a suitable manometer, so as to avoid dangerous overpressures. However, it is suitable to keep within this sector slightly higher pressure than the atmospheric one, so as to avoid the unintended entry of external air.

In any case, once the final condition has been reached, gas injections through conduit 8 and gas drawing through conduit 9 are interrupted. Rotor 4 performs another 90° rotation, so that the solid material reaches the position of sector 3A, facing towards outlet opening 7. The material can now exit from device 1, entering plant 11, according to the direction of arrow F and passing to processing in machine 12. The conditions within sector 3A and within plant 11 are virtually identical, so that the control of the atmosphere within plant 11 remains complete and there are no appreciable losses or oscillations of the desired features.

The subsequent rotation of rotor 4 will bring controlled atmosphere into the position of sector 3D. In this position, if suitable or desired, gas retrieval in controlled conditions can take place through conduit 9. That is suitable (even if amounts are small) in case of very expensive gases, such as helium, argon and the like. In this case the gas going out of conduit 9 of sector 3D could be directly injected through the conduit 8 of sector 3B. It can be assumed, for this purpose, to provide a two-way conduit with check valves for gas supply into conduit 8.

Alternatively, it is possible to proceed to injections of atmospheric air through conduit 8 and extractions of excess gas from conduit 9. This alternative is very useful in case of harmful gases contained within plant 11.

Of course, if none of these conditions occurs, when the sector is in this position no operation takes place and the gas is simply released into the air when the sector is brought back into position 3C upon the subsequent rotation.

The process for releasing the processed material is fully similar.

The material processed in machine 12 is released, for example, according to the direction of arrows P and A. Should, for example, machine 12 be a stalk-removing machine, P may be the grape discharge direction for the subsequent wine processing and A that of the stalks, to be removed. The processed material enters sector 3C from opening 6. The atmosphere within sector 3C is equal to that of plant 11, which is controlled.

A first 90° rotation of rotor 4 brings the solid material into the position of sector 3B. In this position the same processing can take place as seen for input into plant 11 with respect to sector 3D. With the subsequent 90° rotation, the material is brought into the position of sector 3A, from which it is discharged through outlet opening 7. At this point, whether there has been processing within the sector or not, the atmosphere within sector 3A nevertheless becomes the external one.

The empty sector is brought by the subsequent 90° rotation into the position of sector 3D. With the gas injections through conduit 8 and the gas removal through conduit 9 the desired atmosphere is retrieved in the sector. The ways are identical to the ones seen before in the position of sector 3B. At the end, the conditions within sector 3D are virtually identical to those of plant 11. The last 90° rotation can then be performed, bringing the empty compartment into the position of sector 3C, opposite inlet opening 6, beginning the cycle again.

It is apparent that the device according to the present invention allows, in an extremely simple way, to input solid material drawn from the outside under external atmospheric conditions, to the inside of an area and/or of a piece of equipment, apt to operate under controlled conditions, allowing to reduce to a minimum, or even to remove, the possible losses of control within the processing area. This occurs in an extremely cheap way and with no need for particularly sophisticated equipment (even though the degree of sophistication might grow in the presence of extremely complex situations, should it become economical for any reason). The input of solids can occur continuously, filling each 3C sector whenever the previous one has been caused to rotate into the subsequent position 3B; semi-continuously, always filling only the same sector 3C; batchwise, filling sector 3C only once for each processing cycle. Device 1 can be caused to operate manually or setting a routine on a suitable computer, which collects the data from the sensors and adjusts according thereto the movement of rotor 4, the injections through conduits 8 and the vents through conduits 9.

The device 1 according to the present invention has been exemplifyingly described with reference to the case in which the gas within plant 11 is a gas other than air. This way is suited to the case in which one wants to work under an inert atmosphere, or in oxidising or reducing atmosphere or if one wants to proceed to processes of chemical deposition in vapour phase and the like.

However, it is also possible that the gas put into the sectors of device 1 is the same air, but in different conditions of pressure, humidity, temperature or else. Even in this case, actually simpler per se, device 1 is suited to reach the desired result.

Unlike what happened in the prior art, solids other than dust may be supplied; moreover - and even more importantly - it is possible to input new solids into the processing area under controlled atmosphere - in particular under an inert gas atmosphere - without altering in the least the same controlled atmosphere, which was not even assumed in the prior art documents.

However, it is understood that the invention must not be considered limited to the particular arrangement illustrated above, which represents only an exemplifying embodiment thereof, but that different variants are possible, all within the reach of a person skilled in the field, without departing from the scope of protection of the invention itself, as defined by the following claims.

### LIST OF REFERENCE CHARACTERS

- 1: Device overall
- 2: Body (of 1)
- 3: Cavity (of 2)
- 3A: Sector (of 3)
- 3B: Sector (of 3)
- 3C: Sector (of 3)
- 3D: Sector (of 3)
- 4: Rotor
- 5A: Blade (of 4)
- 5B: Blade (of 4)
- 5C: Blade (of 4)
- 5D: Blade (of 4)
- 6: Inlet opening (of 1)
- 7: Outlet opening (of 1)
- 8: Gas input conduit
- 9: Gas output conduit
- 10: Seals (of 4)
- 11: Controlled-atmosphere plant
- 12: Machine (of 11)
- F: Direction of solid input
- P: Direction of solid output
- A: Direction of solid output

## Claims

1. Device (1) for the introduction of solid objects into environments under controlled conditions (11), consisting of a rotocell comprising a body (2) which contains a cavity (3), the cavity is partitioned in a number of sectors (3A, 3B, 3C, 3D) by blades (5A, 5B, 5C, 5D) of a rotor (4), on the side surface of the body (2) of said rotocell there being present at least one gas input conduit (8) into said rotocell and at least one gas output conduit (9) from the inside of the rotocell body (2) and the movement of the rotor (4) occurring by discrete stages, wherein through the gas input conduit (8) a gas is supplied into a sector arranged within a pair of blades (5A-5D) of the rotor (4) in a certain position (3B), said gas supplied having a composition corresponding to that of the atmosphere or gas contained in the controlled-condition environment (11), **characterised in that** the blades (5A, 5B, 5C, 5D) of said rotor (4) carry seals (10) on their ends facing the walls of the cavity (3), **in that** such device comprises within its body (2) one or more sensors for detecting one or more features of the atmosphere or gas contained within a sector (3A, 3B, 3C, 3D) of the device (1) and **in that** the gas contained in said sector is then partly caused to vent through the gas output conduit (9), the supply of the gas supplied from the gas input conduit (8) and the draw of the gas contained in the sector (3A, 3B, 3C, 3D) from the output conduit (9) being repeated multiple times, until one arrives to a situation in which the concentration of the gas contained in the sector is virtually equal to the one of the gas contained in the controlled-condition environment (11).

2. Device (1) as in claim 1), **characterised in that** said rotor (4) comprises four blades (5A, 5B, 5C, 5D).

3. Device (1) as claimed in claim 1) or 2), **characterised in that** the material of said seals is chosen from the group consisting of teflon, polyethylene, polypropylene, polyvinyl chloride.

4. Plant (11) for controlled-condition processes, **characterised in that** the supply of the solids to be processed and the removal of the processed solid occur through at least two devices (1) according to any one of the preceding claims.

5. Plant (11) as in claim 4), **characterised in that** it contains within itself one or more machines (12) for processes on solids.

6. Plant (11) as in claim 5), **characterised in that** said machine (12) is a stalk-removing machine.

7. Plant (11) as claimed in claim 4) or in 5), **characterised in that** it is a plant apt to a process chosen among drug production, manufacturing of electronic components, chemical reaction, fermentation, garbage disposal, chemical deposition in the vapour phase, welding.

## Patentansprüche

1. Vorrichtung (1) zur Einführung von festen Gegenständen in Umgebungen unter kontrollierten Bedingungen (11), bestehend aus einer Rotorzelle, die einen Körper (2) umfasst, der einen Hohlraum (3) enthält, wobei der Hohlraum in einer Anzahl von Sektoren (3A, 3B, 3C, 3D) durch Schaufeln (5A, 5B, 5C, 5D) eines Rotors (4) unterteilt ist, wobei auf der Seitenoberfläche des Körpers (2) der Rotorzelle mindestens eine Gaseintrittsleitung (8) in die Rotorzelle und mindestens eine Gasaustrittsleitung (9) aus dem Inneren des Körpers (2) der Rotorzelle vorhanden sind und wobei die Bewegung des Rotors (4) in diskreten Stufen stattfindet, wobei durch die Gaseintrittsleitung (8) ein Gas in einen Sektor, der innerhalb eines Paares von Schaufeln (5A-5D) des Rotors (4) in einer bestimmten Position (3B)angeordnet ist, zugeführt wird, wobei das zugeführte Gas eine Zusammensetzung aufweist, die derjenigen der Atmosphäre oder des in der Umgebung mit kontrollierten Bedingungen (11) enthaltenen Gases entspricht, **dadurch gekennzeichnet, dass** die Blätter (5A, 5B, 5C, 5D) des Rotors (4) an ihren den Wänden des Hohlraums (3) zugewandten Enden Dichtungen (10) tragen, dass eine solche Vorrichtung in ihrem Körper (2) einen oder mehrere Sensoren zum Erfassen eines oder mehrerer Merkmale der Atmosphäre oder des Gases, der in einem Sektor (3A, 3B, 3C, 3D) der Vorrichtung (1) enthalten ist, umfasst und dass das in diesem Sektor enthaltene Gas dann teilweise durch die Gasaustrittsleitung (9) zum Entlüften gebracht wird, wobei die Zufuhr des aus der Gaseintrittsleitung (8) zugeführten Gases und die Entnahme des in dem Sektor (3A, 3B, 3C, 3D) enthaltenen Gases aus der Ausgangsleitung (9) mehrfach wiederholt wird, bis man zu einer Situation gelangt, in der die Konzentration des in dem Sektor enthaltenen Gases praktisch gleich derjenigen des in der Umgebung mit kontrollierten Bedingungen (11) enthaltenen Gases ist.

2. Vorrichtung (1) nach Anspruch 1), **dadurch gekennzeichnet, dass** der Rotor (4) vier Blätter (5A, 5B, 5C, 5D) umfasst.

3. Vorrichtung (1) nach Anspruch 1) oder 2), **dadurch gekennzeichnet, dass** das Material der Dichtungen aus der Gruppe bestehend aus Teflon, Polyethylen, Polypropylen und Polyvinylchlorid ausgewählt ist.

4. Anlage (11) zur Durchführung von Prozessen unter kontrollierten Bedingungen, **dadurch gekennzeichnet, dass** die Zufuhr an festen Gegenständen, die zu verarbeiten sind, und die Abfuhr von verarbeiteten festen Gegenständen mittels zumindest zweier Vorrichtungen (1) nach einem der vorhergehenden Ansprüche durchgeführt wird.

5. Anlage (11) nach Anspruch 4, **dadurch gekennzeichnet, dass** diese weiterhin eine oder mehrere Maschinen (12) zum Verarbeiten der festen Gegenstände beinhaltet.

6. Anlage (11) nach Anspruch 5, **dadurch gekennzeichnet, dass** die Maschine (12) eine Stängelentfernungsmaschine ist.

7. Anlage (11) nach einem der Ansprüche 4 oder 5, **dadurch gekennzeichnet, dass** die Anlage dazu ausgelegt ist, einen ausgewählten aus den folgenden Prozessen durchzuführen: Pharmakaproduktion, Herstellung von elektrischen Komponenten, chemische Reaktion, Fermentation, Mülltrennung, chemische Abscheidungen aus der Gasphase, Schweißen.

## Revendications

1. Dispositif (1) pour introduire des objets solides dans des environnements (11) sous conditions contrôlées, consistant en une cellule tournante comprenant un corps (2) contenant une cavité (3), la cavité étant divisée en un certain nombre de secteurs (3A, 3B, 3C, 3D) par des lames (5A, 5B, 5C, 5D) d'un rotor (4), étant présents sur la surface latérale du corps (2) de la cellule tournante au moins un conduit (8) d'entrée de gaz dans ladite cellule tournante et au moins un conduit (9) de sortie de gaz à partir de l'intérieur du corps (2) de la cellule tournante, et le mouvement du rotor (4) se produisant par étapes discrètes, dans lequel un gaz est fourni via le conduit (8) d'entrée de gaz à un secteur disposé entre deux lames (5A-5D) du rotor (4) dans une certaine position (3B), ledit gaz fourni ayant une composition correspondant à celle de l'atmosphère ou d'un gaz contenu dans l'environnement (11) sous conditions contrôlées, **caractérisé en ce que** les lames (5A, 5B, 5C, 5D) dudit rotor (4) portent des garnitures d'étanchéité (10) sur leurs extrémités tournées vers les parois de la cavité (3), **en ce que** le dispositif comprend à l'intérieur de son corps (2) un ou plusieurs capteurs destinés à détecter une ou plusieurs caractéristiques de l'atmosphère ou du gaz contenu dans un secteur (3A, 3B, 3C, 3D) du dispositif (1), et **en ce que** le gaz contenu dans ledit secteur est alors amené à s'évacuer partiellement via le conduit (9) de sortie de gaz, la fourniture du gaz fourni à partir du conduit (8) d'entrée de gaz et l'extraction du gaz contenu dans le secteur (3A, 3B, 3C, 3D) via le conduit (9) de sortie de gaz étant répétés plusieurs fois jusqu'à aboutir à une situation dans laquelle la concentration du gaz contenu dans le secteur est virtuellement égale à celle du gaz contenu dans l'environnement (11) sous conditions contrôlées.

2. Dispositif (1) selon la revendication 1, **caractérisé en ce que** ledit rotor (4) comprend quatre lames (5A, 5B, 5C, 5D) .

3. Dispositif (1) selon la revendication 1 ou 2, **caractérisé en ce que** le matériau desdites garnitures d'étanchéité est choisi dans le groupe consistant en le téflon, le polyéthylène, le polypropylène, le poly(chlorure de vinyle).

4. Installation (11) pour la mise en oeuvre de traitements sous conditions contrôlées, **caractérisé en ce que** la fourniture des solides à traiter et l'enlèvement des solides traités s'effectuent via au moins deux dispositifs (1) selon l'une des revendications précédentes.

5. Installation (11) selon la revendication 4, **caractérisée en ce qu'**elle contient en son sein une ou plusieurs machines (12) pour le traitement de solides.

6. Installation (11) selon la revendication 5, **caractérisée en ce que** la machine (12) est une machine d'enlèvement de tiges.

7. Installation (11) selon la revendication 4 ou 5, **caractérisée en ce qu'**il s'agit d'une installation apte à mettre en oeuvre un procédé choisi parmi la production de médicaments, la fabrication de composants électroniques, les réactions chimiques, la fermentation, le traitement de déchets, le dépôt chimique en phase vapeur, le soudage.
